# EUROPÄISCHE PATENTSCHRIFT

(11) **EP 1 736 327 B1**
(45) Veröffentlichungstag und Bekanntmachung des Hinweises auf die Patenterteilung: **04.04.2018**
(21) Anmeldenummer: 06012797.4
(22) Anmeldetag: 22.06.2006
(51) Int. Cl.: B60B 35/08, B60G 11/30, B60G 21/05

(54) **Fahrzeugachse**
Vehicle axle
Essieu de véhicule

(30) Priorität: 25.06.2005 DE 102005029540
(43) Veröffentlichungstag der Anmeldung: 27.12.2006
(73) Patentinhaber: JOST-Werke GmbH, 63263 Neu-Isenburg (DE)
(72) Erfinder: Kerschbaum, Hans-Werner, 34119 Kassel (DE); Mittendorf, Nils, 35274 Kirchhain (DE); Spiegelberg, Gernot, Prof.- Dr., 71296 Heimsheim (DE); Wenigmann, Mario, 34298 Helsa (DE)
(74) Vertreter: RLTG

(56) Entgegenhaltungen:
- EP-A1- 1 500 531
- FR-A1- 2 839 014
- GB-A- 1 546 977
- JP-A- 2000 158 928
- US-B1- 6 398 236

## Beschreibung

Die Erfindung betrifft eine Fahrzeugachse gemäß dem Oberbegriff des Patentanspruches 1 sowie einen Anhänger mit einer solchen Fahrzeugachse.

Aus der DE 196 32 515 C2 ist eine Achse mit Druckluftbremsen bekannt, die einen Achskörper umfasst und über einen am Aufbau angelenkten Längslenker am Aufbau angebunden ist.

Die US 6 398 236 B1 offenbart eine Achse, die über einen am Aufbau angelenkten Längslenker am Aufbau angebunden ist und sich mittels einer Luftfeder gegenüber dem Aufbau abstützt. Die Achse umfasst einen Achskörper mit an dessen Längsenden angeordneten Lagern, wobei die Lager zur drehbeweglichen Anordnung von Rädern befähigt sind. Ferner ist der aus mehreren Teilen gebildete Achskörper als Druckluftspeicher ausgebildet und mit einem pneumatischen System verbunden.

Die GB 1 546 977 A1 offenbart ebenfalls einen als Druckluftspeicher ausgebildeten Achskörper sowie ein Verfahren zum Aufbringen einer Beschichtung auf eine Innenwand des Achskörpers zur Korrosionsvermeidung.

Die EP 1 500 531 A1 offenbart eine Achsanordnung für einen Anhänger oder Auflieger, wobei die Achsanordnung im Wesentlichen einen Achskörper zur drehbaren Lagerung von Rädern und eine Druckluftversorgung zum Betreiben einer pneumatischen Betriebsbremse und einer Luftfeder aufweist. Die Druckluftversorgung umfasst im Wesentlichen einen Druckluftspeicher, der vorzugsweise innerhalb des Achskörpers angeordnet ist und ein automatisches Entwässerungsventil aufweist. Ferner ist die Achsanordnung mittels eines Trägers schwenkbeweglich an einem Fahrzeugaufbau angelenkt und stützt sich mittels der Luftfeder gegenüber diesem ab.

Aufgabe der Erfindung ist es, die zum Betrieb der Achse erforderlichen Bauteile und den zur Anordnung der Bauteile erforderlichen Bauraum zu reduzieren.

Diese Aufgabe wird durch eine Fahrzeugachse mit den Merkmalen des Patentanspruches 1 gelöst.

Die erfindungsgemäße Fahrzeugachse zeichnet sich durch einen als Druckluftspeicher ausgebildeten Achskörper aus, wobei in den Endstücken des Achskörpers als Längslenker ausgebildete Führungselemente integriert und am Aufbau schwenkbeweglich gelagert sind, und wobei die Führungselemente als Druckluftspeicher nutzbare Hohlkörper ausgeführt sind. Der hohle, vorzugsweise als Schweißkonstruktion ausgebildete Achskörper ist mit Druckluft befüllt. Der Achskörper ist beispielsweise als Starrachse ausgebildet und beweglich an einem Fahrzeugaufbau angebunden. Unter Fahrzeugaufbau ist beispielsweise ein Fahrzeugrahmen oder auch ein mit dem Fahrzeugrahmen verbundener Aggregateträger zu verstehen. In vorteilhafter Weise kann durch die Nutzung des Achskörpers als Druckluftspeicher ein als Zusatzbauteil ausgeführter Druckluftspeicher entfallen. Damit kann ein bauraumoptimierter und kostengünstiger Druckspeicher zur Verfügung gestellt werden. Besonders vorteilhaft ist dabei, dass in den Endstücken des Achskörpers als Längslenker ausgebildete Führungselemente integriert und am Aufbau schwenkbeweglich gelagert sind. Die Längslenker sind in einer Schweißkonstruktion einteilig mit dem Achskörper ausgeführt. Neben einer kostengünstigen Achskonstruktion ist in vorteilhafter Weise auch ein Hohlraum des Längslenkers als Druckspeicher nutzbar.

In Ausgestaltung der Erfindung umfasst der Achskörper ein mit zwei, jeweils einen Achszapfen tragenden Endstücken verschweißtes Rohrelement. Das Rohrelement weist vorzugsweise einen runden Querschnitt auf. Das Rohrelement ist aus Halbzeug kostengünstig herstellbar. Die Endstücke weisen gleichfalls eine im Wesentlichen runde, rohrförmige Form auf. Damit weist der Achskörper eine zur Speicherung von hohem Druck geeignete druckfeste Gestaltung auf.

In weiterer Ausgestaltung der Erfindung sind die Führungselemente als Blattfedern ausgeführt. Blattfedern übernehmen neben der Federungsfunktion auch Achsführungseigenschaften, so dass eine kostengünstige Achskonstruktion ermöglicht ist.

In weiterer Ausgestaltung der Erfindung weist der Achskörper eine luftdichte Wandung auf, die unmittelbar das Volumen des Druckluftspeichers umgrenzt. Der vorzugsweise als Schweißkonstruktion ausgeführte Achskörper ist luftdicht. Damit kann dieser als Druckspeicher genutzt werden. Auf die Anordnung von beispielsweise einer zusätzlichen luftdichten Membran im Achskörper kann in vorteilhafter Weise verzichtet werden.

In weiterer Ausgestaltung der Erfindung weist der Achskörper einen Anschluss für eine Luftzufuhr- und eine Speiseleitung sowie eine Entwässerungsvorrichtung auf. Neben Flanschplatten zur Anschraubung eines Federbalgträgers sind weitere, Gewinde aufweisende Flanschscheiben zur Aufnahme der Anschlüsse für die Leitungen am Achskörper luftdicht angeschweißt. Die Flanschscheiben weisen im Bereich der Verschraubung von Druckluftleitungen und der Entwässerungsvorrichtung eine ausreichende Dicke auf, um die für die Anschlüsse erforderliche Einschraubtiefe zu gewährleisten. Die Entwässerungsvorrichtung ist als manuell betätigbares oder als selbstentwässerndes Ventil ausgeführt.

Die Erfindung zeichnet sich weiterhin dadurch aus, dass an der Entwässerungsvorrichtung ist eine Rohrleitung angeordnet, die in den Sammelbereich von Kondenswasser führt. Die Entwässerungsvorrichtung ist beispielsweise aus Bauraummangel oder aus Kostengründen nicht im Sammelbereich von Kondenswasser, d.h. an der am tiefsten liegenden Stelle des Achskörpers anordenbar. Dennoch kann durch die Rohrleitung in Verbindung mit ausströmender Luft in vorteilhafter Weise Kondenswasser aus dem Druckbehälter gefördert werden.

In weiterer Ausgestaltung der Erfindung umfasst der Achskörper einen Druckluftspeicher zur Versorgung einer Bremsanlage oder einer Luftfederung. Der Achskörper bietet in vorteilhafter Weise die erforderliche Festigkeit zur Beaufschlagung mit Druck für eine Bremsanlage oder eine Luftfederung. Ein weiterer Vorteil ist die unmittelbar zu den Bremsen oder zu Luftfedern benachbarte Lage des Achskörpers. Damit kann in vorteilhafter Weise eine kurze und kostengünstige Zuleitung zu den Bremsen oder Luftfedern vorgesehen werden.

In weiterer Ausgestaltung der Erfindung sind die das Volumen des Druckluftspeichers begrenzende Achskörperwände mit Korrosionsschutzmittel beschichtet. Da der Achskörper direkt mit Druckluft beaufschlagt ist, kommt Kondenswasser mit den Achskörperwandungen in Kontakt. Korrosionsschutzmittel verhindert in vorteilhafter Weise ein durch Durchrosten der Wandungen verursachtes Versagen des als Druckbehälter genutzten Achskörpers.

Weiterhin weist ein Anhänger eine erfindungsgemäße Achse auf. Die erfindungsgemäße Achse ermöglicht in vorteilhafter Weise den Entfall von am Aufbau angeordneten Druckbehältern. Selbstverständlich können je nach Luftvolumenbedarf auch
zwei oder mehrere Achsen des Anhängers gemäß der erfindungsgemäßen Achse als Druckbehälter ausgeführt sein.

Weitere Merkmale und Merkmalskombinationen ergeben sich aus der Beschreibung sowie den Zeichnungen. Ein konkretes Ausführungsbeispiel der Erfindung ist in den Zeichnungen vereinfacht dargestellt und in der nachfolgenden Beschreibung näher erläutert.

Es zeigen
- Fig. 1: eine schematische Darstellung einer erfindungsgemäßen Achse in Einbaulage,
- Fig. 2: eine Draufsicht auf den Achskörper der erfindungsgemäßen Achse,
- Fig. 3: eine teilweise geschnittene Seitenansicht des Achskörpers aus Fig. 2 und
- Fig. 4: perspektivische Ansicht des geschnittenen Achskörpers Aus Fig.1.

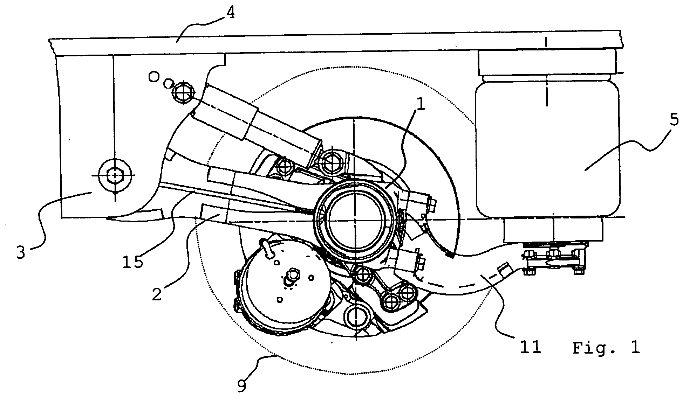

Gleiche und gleichwirkende Bauteile in den Figuren 1 bis 4 sind im Folgenden mit den gleichen Bezugszeichen bezeichnet.

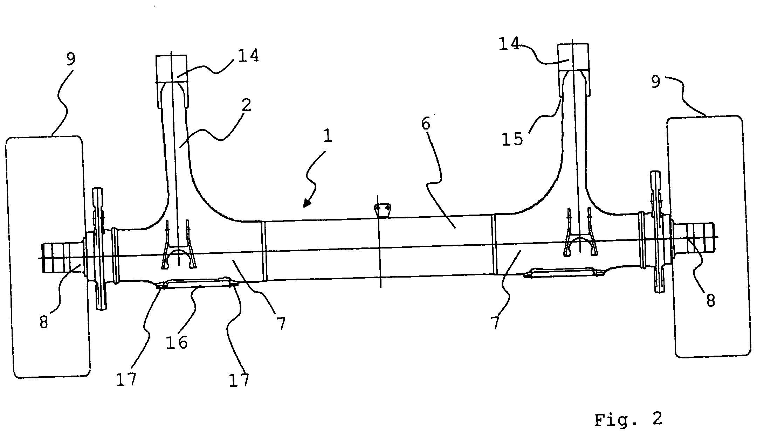

In Fig. 1 ist schematisch eine in einem Fahrzeug verbaute erfindungsgemäße Achse angeordnet. Die Achse umfasst einen Achskörper 1, der in vorliegendem Beispiel einteilig mit als Längslenker ausgeführten Führungselementen 2 hergestellt ist, siehe auch Fig.2. Selbstverständlich können die Führungselemente 2 auch beispielsweise durch Verschraubung mit dem Achskörper 1 verbunden sein. Einerseits ist der Achskörper 1 über die Längslenker 2 schwenkbar in einer mit einem Aufbau 4 verbunden Konsole 3 gelagert, andererseits ist der Achskörper 1 mit einem Balgträger 11 verbunden, der die Achse über eine Luftfeder 5 gegenüber dem Aufbau 4 federnd abstützt.

Gemäß Fig. 2 ist der Achskörper 1 aus einem Rohrelement 6 aufgebaut, das mit zwei Endstücken 7 verschweißt ist. An den Endstücken 7 sind wiederum jeweils Räder 9 tragende Achszapfen 8 angeschweißt. In den als Schweißkonstruktion aufgebauten hohlen Endstücken 7 sind achsführende, hohle Lenker 2 integriert. Am Ende der Längslenker 2 sind für die Lagerung in den Konsolen 3 vorgesehene Lenkeraugen 14 angeschweißt.

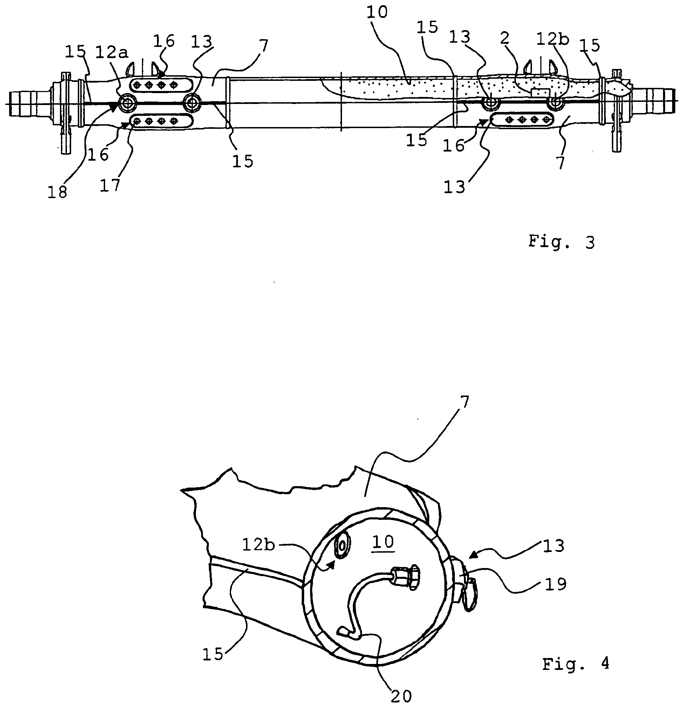

Das Rohrelement 6, die Endstücke 8 und die Achszapfen 8 umgrenzen gemäß Fig.3 ein Volumen 10 innerhalb des Achskörpers 1. Der Hohlraum der Längslenker 2 sind in vorteilhafter Weise an das Volumen 10 mit angeschlossen. Erfindungsgemäß ist dieses Volumen 10 als Druckspeicher genutzt. Hierzu sind am Achskörper 1 zwei mit Gewinde versehene Öffnungen 12a,12b angeordnet, die den Anschluss einer Druckzufuhrleitung zur Befüllung des Druckspeichers über einen Kompressor und einer Druckspeiseleitung zur Versorgung einer Bremsanlage ermöglichen.

Weiter sind zwei Öffnungen 13 zur Anordnung für als Ventile 19 ausgeführte Entwässerungsvorrichtungen vorgesehen. Die Ventile 19 sind für eine manuelle Betätigung gut zugänglich angeordnet. Das Kondenswasser sammelt sich an am tiefsten liegenden Stellen des Druckbehältervolumens 10. Damit dieses Kondenswasser entweichen kann, ist zwischen den tiefsten Stellen in denen sich das Kondenswasser sammelt und den Ventilen 19 eine Rohrleitung 20 angeordnet, siehe Fig. 4. Die Rohrleitung 20 ist beispielsweise aus einem Metallrohr oder einem geformten Gummischlauch hergestellt. Beim Öffnen des Ventils 20 drückt entweichende Luft das Kondenswasser durch die Rohrleitung 20 und das Ventil 19 aus dem Hohlraum 10 des Achskörpers 1.

Die Öffnungen 12a,12b,13 sind in Flanschscheiben 18, die auf den Endstücken 7 luftdicht aufgeschweißt sind, angeordnet. Die Flanschscheiben weisen eine ausreichende Dicke auf, so dass die als Verbindung zum Innenvolumen 10 des Achskörpers 1 vorgesehenen Öffnungen 12a,12b,13 mit einem Gewinde ausreichender Länge versehbar sind. In die Gewinde der Öffnungen 12a,12b,13 sind Anschlusstücke für Druckleitungen bzw. Entwässerungsvorrichtungen einschraubbar.

Die vier Öffnungen 12a,12b,13 des Achskörpers 1 sind in vorteilhafter Weise zur Einbringung von Korrosionsschutzmittel nutzbar. Durch Einführung eines Sprühkopfes in den Achskörper 1 ist das Korrosionsschutzmittel verteilbar, womit eine gleichmäßige Benetzung der metallischen Oberfläche erzielbar ist.

Selbstverständlich können an dem Achskörper 1 auch weitere Gewindebohrungen beispielsweise für Überdruckventile angeordnet sein.

Die rohrförmige Gestaltung der mit Druck beaufschlagten Komponenten des Achskörpers 1, d.h. des Rohrelementes 6, der Endstücke 7 und der Längslenker 2, in Verbindung mit entsprechender Wanddicke von mindestens zwei Millimetern gibt dem Achskörper 1 eine zur Beaufschlagung des Hohlraumes mit Bremsdruck erforderliche Festigkeit. Die Schweißnähte 15 verbinden die Komponenten des Achskörpers 1 luftdicht, siehe Figuren 1 bis 3.

Durch die Nutzung des Achskörpers 1 als Druckluftbehälter kann ein als Zusatzteil ausgeführter Druckluftbehälter entfallen. Die Integration des Volumens der hohlen Längslenker 2 im Achskörper 1 erhöht die Speicherkapazität des Druckluftbehälters.

### Bezugszeichenliste

- 1: Achskörper
- 2: Führungselement, Längslenker
- 3: Konsole
- 4: Aufbau
- 5: Luftfeder
- 6: Rohrelement
- 7: Endstück
- 8: Achszapfen
- 9: Räder
- 10: Volumen
- 11: Balgträger
- 12a: Öffnung für Luftspeiseleitung
- 12b: Öffnung für Luftzuführleitung
- 13: Öffnung für Entwässerungsvorrichtung
- 14: Lenkeraugen
- 15: Schweißnaht
- 16: Flanschplatte
- 17: Gewinde zur Anschraubung des Federbalgträgers
- 18: Flanschscheibe
- 19: Entwässerungsvorrichtung, Ventil
- 20: Rohrleitung

## Patentansprüche

1. Fahrzeugachse mit einem Achskörper (1),
- der über Führungselemente (2) beweglich an einem Fahrzeugaufbau (4) angebunden ist,
- an dessen Enden beidseits Räder (9) drehbeweglich gelagert sind und
- der als Druckluftspeicher ausgebildet ist,
**dadurch gekennzeichnet, dass**
in den Endstücken (7) des Achskörpers (1) als Längslenker ausgebildete Führungselemente (2) integriert und am Aufbau (4) schwenkbeweglich gelagert sind, wobei die Führungselemente (2) als Druckluftspeicher nutzbare Hohlkörper ausgeführt sind.

2. Fahrzeugachse nach Anspruch 1,
**dadurch gekennzeichnet, dass**
der Achskörper (1) ein mit zwei jeweils einen Achszapfen (8) tragenden Endstücken (7) verschweißtes Rohrelement (6) umfasst.

3. Fahrzeugachse nach einem der Ansprüche 1 oder 2,
**dadurch gekennzeichnet, dass**
die Führungselemente (2) als Blattfedern ausgeführt sind.

4. Fahrzeugachse nach einem der vorherigen Ansprüche,
**dadurch gekennzeichnet, dass**
der Achskörper (1) eine luftdichte Wandung aufweist, die unmittelbar das Volumen des Druckluftspeichers umgrenzt.

5. Fahrzeugachse nach einem der vorherigen Ansprüche,
**dadurch gekennzeichnet, dass**
der Achskörper (1) einen Anschluss für eine Luftzufuhr- und eine Speiseleitung (12a, 12b) aufweist.

6. Fahrzeugachse nach einem der Ansprüche 1 bis 5,
**dadurch gekennzeichnet, dass**
der Achskörper (1) eine Entwässerungsvorrichtung (19) aufweist.

7. Fahrzeugachse nach Anspruch 6,
**dadurch gekennzeichnet, dass**
an der Entwässerungsvorrichtung (19) eine Rohrleitung (20) angeordnet ist, die zu einem Sammelbereich von Kondenswasser führt.

8. Fahrzeugachse nach einem der Ansprüche 1 bis 7,
**dadurch gekennzeichnet, dass**
der Achskörper (1) einen Druckluftspeicher zur Versorgung einer Bremsanlage oder einer Luftfederung umfasst.

9. Fahrzeugachse nach einem der Ansprüche 1 bis 8,
**dadurch gekennzeichnet, dass**
die das Volumen des Druckluftspeichers begrenzende Achskörperwände mit Korrosionsschutzmittel beschichtet sind.

10. Anhänger,
**dadurch gekennzeichnet, dass**
der Anhänger eine Achse nach einem der Ansprüche 1 bis 9 umfasst.

## Claims

1. Vehicle axle with an axle body (1),
- which is attached moveably to a vehicle body (4) via guiding elements (2),
- at the ends of which wheels (9) are mounted for rotary motion on both sides and
- which is adapted as a compressed air reservoir,
**characterized in that**
guiding elements (2) adapted as trailing arms are integrated into the end portions (7) of the axle body (1) and are mounted for pivoting motion at the body (4), wherein the guiding elements (2) are adapted as hollow bodies which can be used as compressed air reservoirs.

2. Vehicle axle according to claim 1,
**characterized in that**
the axle body (1) comprises a tube element (6) welded to two end portions (7) each carrying an axle journal (8).

3. Vehicle axle according to one of claims 1 or 2,
**characterized in that**
the guiding elements (2) are adapted as leaf springs.

4. Vehicle axle according to one of the preceding claims,
**characterized in that**
the axle body (1) comprises an air-tight wall directly defining the volume of the compressed air reservoir.

5. Vehicle axle according to one of the preceding claims,
**characterized in that**
the axle body (1) comprises a connection for an air supply and supply line (12a, 12b).

6. Vehicle axle according to one of the preceding claims,
**characterized in that**
the axle body (1) comprises a dewatering device (19).

7. Vehicle axle according to claim 6,
**characterized in that**
a tube line (20) is arranged at the dewatering device (19) leading to a collection area for condensation water.

8. Vehicle axle according to one of claims 1 to 7,
**characterized in that**
the axle body (1) comprises a compressed air reservoir for supply to a breaking system or an air suspension.

9. Vehicle axle according to one of claims 1 to 8,
**characterized in that**
the axle body walls defining the volume of the compressed air reservoir are coated with an anticorrosive agent.

10. Trailer,
**characterized in that** the trailer comprises an axle according to one of claims 1 to 9.

## Revendications

1. Axe de véhicule avec un corps d'axe (1),
- qui est attaché à un corps de véhicule (4) de manière mobile par des membres de guidage (2),
- aux extrémités duquel des roues (9) sont montées des deux côtés pour un mouvement rotatif,
- qui est adapté sous forme de réservoir d'air comprimé,
**caractérisé en ce que** des membres de guidage (2) adaptés comme bras longitudinaux sont intégrés dans les extrémités (7) du corps d'axe (1) et sont montés au corps (4) pour un mouvement pivotant, les membres de guidage (2) étant adaptés sous forme de corps creux utilisable en tant que réservoir d'air comprimé.

2. Axe de véhicule selon la revendication 1,
**caractérisé en ce que**
le corps d'axe (1) comprend un membre tubulaire (6) soudé à deux extrémités (7) portant chacune un pivot d'axe (8).

3. Axe de véhicule selon une des revendications 1 ou 2,
**caractérisé en ce que**
les membres de guidage (2) sont adaptés sous forme de ressorts à lames.

4. Axe de véhicule selon une des revendications précédentes,
**caractérisé en ce que**
le corps d'axe (1) comprend une paroi étanche à l'air qui définit directement le volume du réservoir d'air comprimé.

5. Axe de véhicule selon une des revendications précédentes,
**caractérisé en ce que**
le corps d'axe (1) comprend un raccordement pour une conduite d'alimentation d'air et une conduite d'alimentation (12a, 12b).

6. Axe de véhicule selon une des revendications 1 à 5,
**caractérisé en ce que**
le corps d'axe (1) comprend un dispositif de drainage (19).

7. Axe de véhicule selon la revendication 6,
**caractérisé en ce que**
une conduite tubulaire (20) est arrangée au dispositif de drainage (19) menant à une zone de collection d'eau de condensation.

8. Axe de véhicule selon une des revendications 1 à 7,
**caractérisé en ce que**
le corps d'axe (1) comprend un réservoir d'air comprimé pour la livraison à un système de freinage ou une suspension pneumatique.

9. Axe de véhicule selon une des revendications 1 à 8,
**caractérisé en ce que**
les parois de corps d'axe définissant le volume du réservoir d'air comprimé sont recouvertes d'un inhibiteur de corrosion.

10. Remorque,
**caractérisé en ce que**
la remorque comprend un axe selon une des revendications 1 à 9.
